# EUROPEAN PATENT SPECIFICATION

(11) **EP 3 421 274 B1**
(45) Date of publication and mention of the grant of the patent: **18.03.2020**
(21) Application number: 17178947.2
(22) Date of filing: 30.06.2017
(51) Int. Cl.: B60D 1/62, B60D 1/02, B60Q 1/00

(54) **STATUS INDICATION OF A COUPLING DEVICE**
STATUSANZEIGE EINER KOPPLUNGSVORRICHTUNG
INDICATION D'ÉTAT D'UN DISPOSITIF DE COUPLAGE

(43) Date of publication of application: 02.01.2019
(73) Proprietor: VBG Group AB (Publ), 462 28 Vänersborg (SE)
(72) Inventor: THORÉN, Anders, 460 64 FRÄNDEFORS (SE)
(74) Representative: AWA Sweden AB

(56) References cited:
- EP-A1- 3 047 986
- WO-A1-2016/065017
- US-A1- 2009 207 627

## Description

### Field of the invention

The present invention relates to an arrangement for providing a status indication of a coupling device of a towing vehicle.

### Background of the invention

In many trailer couplings, the operating arm of a coupling pin, typically a vertically movable coupling pin, will serve as a first locking device of the coupling. Its position will also provide an indication of the state of the coupling device (i.e. locked or unlocked). However, in many jurisdictions, there are regulations in place which stipulate a second level safety device, in addition to the operating arm. Such a second level safety device may for example be provided by a locking pin or other member which is operable to engage with the coupling pin to ensure its unlocked position.

In order to determine the status of such a second level safety device, the second level safety device is typically provided with a sensor which can detect the status of the device. Further, there is provided some means to provide a status indication to the driver. The document EP 3 047 986 A1 discloses an arrangement for providing a status indication according to the preamble of claim 1. As an example, the status can normally be "green" (indicating that the coupling pin is also locked) or "red" (indicating that the status of the coupling pin is unknown).

In some cases, an indicator is arranged in the driver compartment (e.g. in the dashboard) and is in electrical connection with the sensor, typically hard-wired. The indicator can thus provide the indication to the driver.

In other cases, it may be sufficient to provide an indication on the side of the vehicle, which may be observed by the driver e.g. in the rear view mirror. One simple way to provide such an indication is to arrange a light emitting device (e.g. a LED) on the side of the vehicle, and connect an electrical wire from the light emitting device to the sensor. However, this has the drawback of requiring that the electrical connection and the light emitting device fulfill electrical safety requirements. Also, the light emitting device and its connection will be susceptible to corrosion, potentially deteriorating the indication function.

### General disclosure of the invention

It is an object of the present invention to overcome the above problems, and to provide an improved indication of a status of a coupling device.

According to a first aspect of the invention, this and other objects are achieved by an arrangement for providing a status indication of a coupling device of a towing vehicle, comprising a sensor arrangement operable to detect when a coupling pin of the coupling device is in an engaged coupling position, a light emitting device electrically connected to the sensor arrangement, and configured to emit a light signal indicative of when the coupling pin is an engaged coupling position, the light emitting device being arranged in the vicinity of the sensor. The arrangement further comprises an optical waveguide arranged to receive the light signal and guide the light signal, and an out-coupling structure arranged to out-couple the light signal from the optical waveguide.

By "vicinity" is here intended that the light emitting device is in the same electrical safety zone as the sensor (and any other electrical circuitry associated with the coupling device).

By using an optical waveguide to guide the light signal, the light signal can be emitted in a manner and at a location where it is easily observed. Using an optical waveguide to guide the light further avoids problems associated with electrical safety regulations in places which are not safety classified. Also, electrical problems caused by corrosion, moisture and dirt are reduced or eliminated.

The optical wave guide can be a flexible optical fiber. Such optical fibers are readily available, and have suitable properties for the present invention.

In some embodiments, the out-coupling structure extends along the surface of the optical waveguide, to provide out-coupling of light in a radial direction along the optical fiber. The out-coupling structure may simply be a grating or other irregularity on the surface of the optical waveguide, serving to interrupt the total internal reflection otherwise occurring in the optical waveguide. By providing out-coupling all along the waveguide, the emission of the light signal can be easy to observe.

The optical fiber may be arranged in a path in a horizontal plane, so as to emit light in all directions in the horizontal plane. For example, the optical fiber can be arranged in one or several loops or windings, e.g. around the coupling device. Such arrangement ensures emission of the light signal in all directions around the towing vehicle, making it easy to observe.

In other embodiments, the optical wave guide has a first end adjacent to the light emitting device, which first end is arranged to receive the light signal, and a second end at a location at a distance from the sensor, where an end surface of the second end forms the out-coupling structure. In this case, the optical waveguide serves to provide a displacement of the light signal emitted by the light emitting device to the location.

The location can be on an outer side of the towing vehicle, where is easily observed. Preferably, the location is on the driver side of the towing vehicle, so that the driver can see the status indication in the rear view mirror.

The out-coupling structure can include an optical element such as a lens, configured to emit the light signal in a desired direction. For example, in case the second end is on the side of the towing vehicle, the lens may direct the light signal towards the front of the towing vehicle.

The light emitting device may comprise at least one light emitting diode (LED). There may be a separate color LED for each indication (e.g. one red and one greed LED), or one single LED may be controlled to emit different colors (or otherwise different signals using e.g. intensity modulation).

The coupling device can be of the type which comprises a locking pin, configured to mechanically lock the coupling pin in its engaged coupling position. Such a locking pin is referred to as a "second safety device". In this case, the sensor arrangement can be configured to detect when the coupling pin is in the engaged coupling position by detecting the position of the locking pin. In a typical coupling device, when the coupling pin is in its engaged (lowered) coupling position, the locking pin is movable in a substantially horizontal direction above the coupling pin, thereby preventing upwards movement and disengagement of the coupling pin.

### Brief description of the drawings

The present invention will be described in more detail with reference to the appended drawings, showing currently preferred embodiments of the invention.
Figure 1 is a schematic and partly broken away top view of a towing vehicle with a coupling device and a status indicating arrangement according to an embodiment of the present invention.
Figures 2a and 2b schematically show a coupling device with a coupling pin and a drawbar with a drawbar eye.
Figures 3a and 3b are section views of an exemplary coupling device including some elements of a status indicating arrangement according to an embodiment of the present invention.

### Detailed description of preferred embodiments

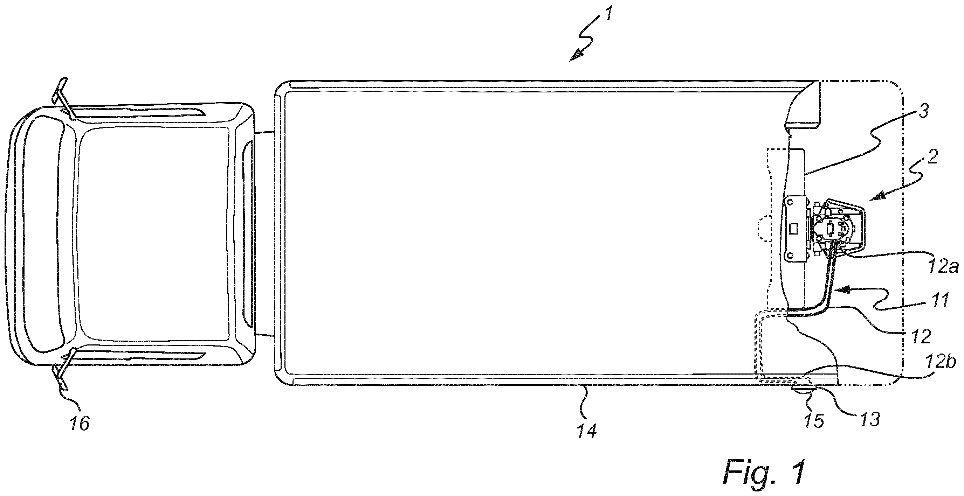

Figure 1 shows very schematically a top view of a towing vehicle 1 provided with a coupling device 2 mounted to a draw beam 3. The rear part of the vehicle 1 has been broken away to more clearly show the coupling device 2. It is noted that the towing vehicle in this case is a motorized truck, but that also an intermediate trailer, i.e. a trailer pulled by a truck and in turn pulling a subsequent trailer, can be referred to as a "towing vehicle".

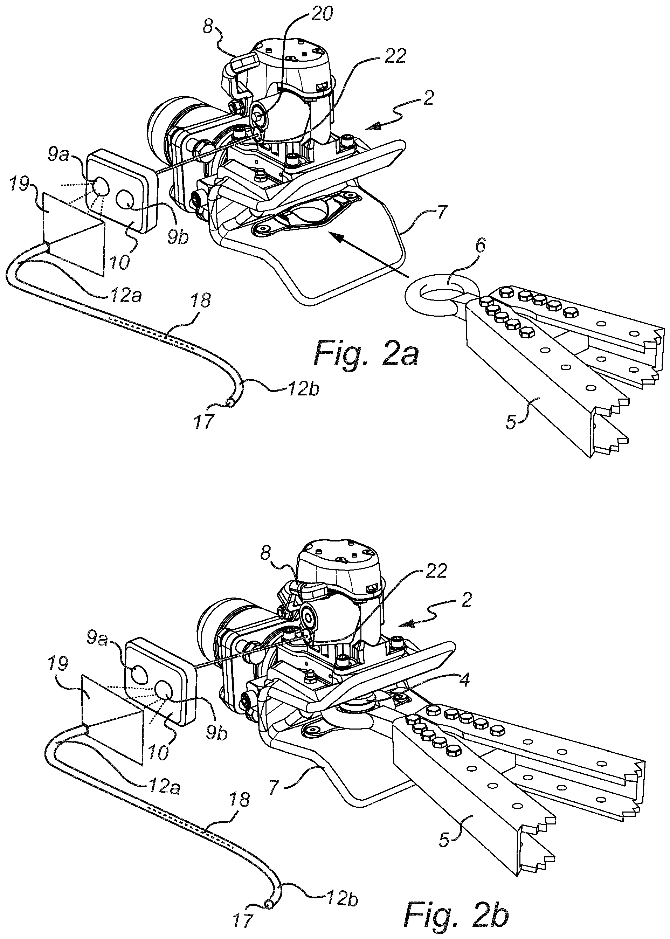

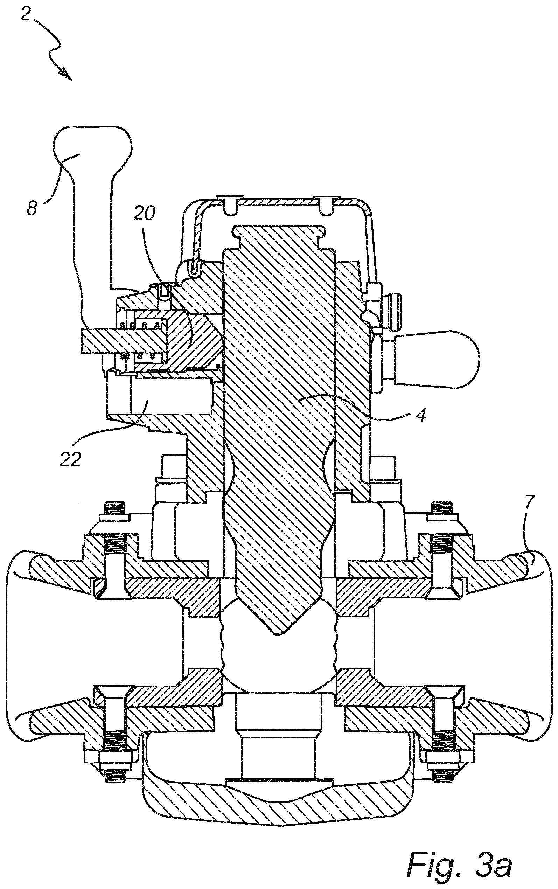

As illustrated very schematically in figures 2a and 2b, the coupling device 2 is of the kind which includes a vertically displaceable coupling pin 4 (see also figure 3a-3b). A drawbar 5 which is mounted to a trailer has in its front end an opening, referred to as a drawbar "eye" 6. The drawbar 5 is insertable into the coupling device 2, into a position such that the eye 6 is located immediately below the coupling pin 4. The coupling device 2 preferably has some type of guiding funnel 7, or coupling mouth, to help guide the drawbar 5 into position. When the drawbar eye 6 is in position, the coupling pin 4 is lowered into the eye 6, thereby securing the drawbar 5 in the coupling device 2 (see figure 2b). The operating handle 8 of the coupling device 2 moves together with the coupling pin 4, and can thus serve as a first indication of when the coupling pin 4 is lowered. Further, the illustrated coupling device 2 includes a second safety device in the form of a springloaded locking pin 20. In figure 2a, the locking pin 20 abuts the coupling pin 4 (or some part of its operating arrangement), and protrudes slightly out of the coupling house. In figure 2b, when the coupling pin 4 is lowered, the locking pin is free to move into an inserted position. The operating arrangement is configured in such a way that the locking pin 20 can only move into its inserted position when the coupling pin is fully lowered, and thus engages the drawbar eye 6. The operation of the locking pin 20 will be described in more detail with reference to figure 3a-3b.

It is critical for a driver or other operator to know when the coupling device 2 has engaged the drawbar 5. For this purpose a status indicator arrangement may be arranged to provide a visual indication of the status of the coupling device 2. In a simple case, the status relates to the positon of the coupling pin 4, i.e. if it is in a raised position (figure 2a) or in a lowered positon (figure 2b). Alternatively, the status indication relates to the status of the second level safety device, so that a first signal indicates that the coupling is definitely engaged (e.g. green light), and a second signal (e.g. red light) indicates that it is not.

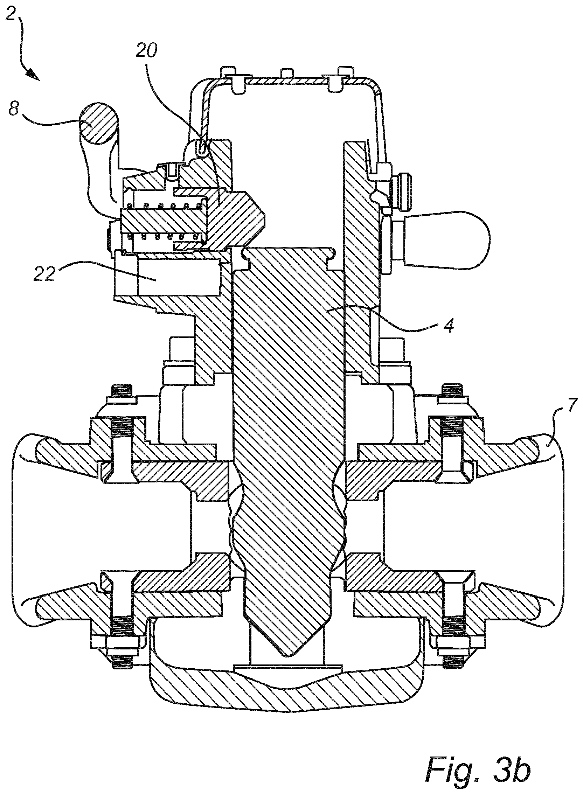

In the illustrated example, the indicator arrangement includes a light emitting device 10, e.g. including one or several light sources 9a, 9b, such as LEDs, arranged in the vicinity of the coupling pin 4. The light emitting device 10 is connected to a sensor 22 (see figure 3a and 3b) which is capable of detecting when the coupling pin 4 is engaged. In figure 2a, when the coupling pin 4 is raised, the first LED 9a is emitting a light signal. In figure 2b, when the coupling pin 4 is lowered, the second LED 9b emits a light signal.

As the coupling device 2 includes sensors and control circuitry (not shown) which require electrical voltage, the device 2 will need to fulfil electrical safety regulations. Therefore, electrical connection of a light emitting device to the sensor will require very little additional work and cost. In particular, it will not require any additional safety regulation assurance.

However, the status indication needs to be made more visible, and for this purpose the arrangement may be provided with an optical waveguide (light guide) 11, e.g. in the form of one or several optical fibers 12, and an out-coupling structure 17, 18 to out-couple light from the waveguide 11. Light emitted from the light emitting device 10 is in-coupled into the light guide 11, and then guided by the light guide 11 to a location where it is desired. In order to reduce losses in the in-coupling process, the arrangement may comprise a suitable in-coupling element 19 in optical contact with the light emitting device and the end of the light guide 11. Such optical in-coupling elements are often used in connection with optical waveguides such as optical fibers, in order to reduce losses.

The out-coupling structure may be any structure that interrupts the total internal reflection that contains light in the light guide 11. The most simple example is the end 12b of the light guide, where light may escape through the end surface 17. However, out-coupling structures may also be formed along the longitudinal axis of the light guide 11, e.g. in the form of gratings 18 or other surface structures. The exact design and location of the out-coupling structure(s) 17, 18 depends on the desired location and appearance of light emission.

According to one example, the light guide 11 is provided with longitudinal out-coupling structures (such as gratings 18), and arranged in a path in a horizontal plane. For example, the light guide 11 can be arranged in a winding or coil around the coupling device 2. As a result, light will be out.-coupled from the light guide 11 in all directions in the horizontal plane, and thus be easily visible in all directions.

In the case illustrated in figure 1 - 2, each optical fiber has a first end 12a arranged to receive light emitted from the light emitting device 10 and a second, distal end 12b arranged at a desired location 13, here on the outer side 14 of the vehicle 1, preferably the driver side. In figure 1, one light source 9a, 9b is used for each of the two status indications (e.g. one red and one green), and two optical fibers 11 are used to guide light from the respective light source. In figure 2, light from the two light sources 9a, 9b is coupled into one single fiber 12.

Further, as the person skilled in the art will realize, it is also possible to have one single light source which is capable to emit two different light signals. For example, it can be light source capable of emitting different colors, e.g. a color controllable LED or a composite light source including several LEDs of different color. Or the first and second signal may be of the same color, but with different characteristics, e.g. steady or flashing light. When one single light emitting device is used to emit both signals, only one single optical fiber is required.

An optical element, e.g. a suitable lens 15, can be arranged adjacent to the end surface 17 of the fiber(s) 12, and configured to in-couple light from the fiber 12 and direct it in a suitable way. For example, the lens 15 may be configured to direct the light signal towards the front of the vehicle 1, so that it may be more easily be seen by a driver in the rear view mirror 16. Alternatively, the lens 15 is simply configured to spread the light from the fiber, to ensure that it is visible in all directions.

Figures 3a and 3b show the coupling device in figures 2a and 2b in sectional view. Here, the coupling pin 4 is more clearly seen in its raised position (figure 3a) and its lowered position (figure 3b). Figure 3a shows how the locking pin 20 abuts against the coupling pin 4, while figure 3b shown how the locking pin is free to move further into the coupling house.

The coupling device 2 further includes a sensor 22, which is arranged to detect the position of the locking pin 20. The sensor is preferably a contact-free sensor, such as an inductive sensor, a magnetic sensor, a Hall effect sensor, an optical sensor, or any other suitable form of sensor. The sensor is electrically connected to the light emitting device 10, such that the first light signal (e.g. green) is emitted when the sensor 22 detects that the locking pin 20 is in the inserted position (figure 3b), while a second light signal (e.g. red) is emitted when the sensor detects the locking pin 20 in the extracted position (figure 3a). It is noted that the first light signal thus indicates that the coupling pin 4 must be in its lowered (engaged) position, while the second signal only indicates that this is not the case, and that the exact positon of the coupling pin 4 is not known. For example, it is not certain that the coupling pin 4 is in its fully raised position.

The person skilled in the art realizes that the present invention by no means is limited to the preferred embodiments described above. On the contrary, many modifications and variations are possible within the scope of the appended claims. For example, different types of optical elements may be used for in-coupling, out-coupling and direction of light.

## Claims

1. An arrangement for providing a status indication of a coupling device of a towing vehicle, comprising:
a sensor arrangement (20) operable to detect when a coupling pin of said coupling device is in an engaged coupling position,
a light emitting device (10) electrically connected to said sensor arrangement, and configured to emit a light signal indicative of when said coupling pin is an engaged coupling position,
said light emitting device (10) being arranged in the vicinity of said sensor,
**characterized by**
an optical waveguide (11) arranged to receive said light signal and guide said light signal, and
an out-coupling structure (17; 18) arranged to out-couple said light signal from said optical waveguide.

2. The arrangement according to claim 1, wherein the optical wave guide (11) is a flexible optical fiber (12).

3. The arrangement according to claim 2, wherein said out-coupling structure (18) extends along the surface of the optical fiber, to provide out-coupling of light in a radial direction along the optical fiber.

4. The arrangement according to claim 3, wherein said optical fiber (12) is arranged in a path in a horizontal plane, so as to emit light in all directions in the horizontal plane.

5. The arrangement according to claim 1 or 2, wherein the optical waveguide (10) has a first end (12a) adjacent to said light emitting device, which first end is arranged to receive said light signal, and a second end (12b) at a location (13) at a distance from said sensor, an end surface (17) of the waveguide (10) forming the out-coupling structure.

6. The arrangement according to claim 5, wherein said location (13) is on an outer side (14) of the towing vehicle (1).

7. The arrangement according to claim 6, wherein said location is on the driver side (14) of the towing vehicle.

8. The arrangement according to one of claims 5 - 7, wherein said out-coupling structure includes a lens (15) configured to emit said light signal in a desired direction.

9. The arrangement according to one of claims 5 - 7, wherein the light emitted by the second end (12b) is directed towards a front of the towing vehicle.

10. The arrangement according to one of the preceding claims, wherein the light emitting device (10) comprises at least one light emitting diode (LED).

11. The arrangement according to one of the preceding claims, wherein the coupling device further comprises a locking pin (20), configured to mechanically lock the coupling pin (4) in its engaged coupling position, and wherein said sensor arrangement (22) is configured to detect when the coupling pin (4) is in the engaged coupling position by detecting the position of said locking pin (20).

12. The arrangement according to claim 11, wherein, when said coupling pin (4) is in its engaged coupling position, the locking pin (20) is movable in a substantially horizontal direction to an inserted position in which the locking pin (20) prevents disengagement of the coupling pin (4).

## Patentansprüche

1. Anordnung zur Bereitstellung einer Statusanzeige einer Kupplungsvorrichtung eines Zugfahrzeugs, umfassend:
eine Sensoranordnung (20), die betreibbar ist, zu detektieren, wann sich ein Kupplungsstift der Kupplungsvorrichtung in einer Kupplungseingriffsposition befindet,
eine Lichtemissionsvorrichtung (10), die elektrisch mit der Sensoranordnung verbunden ist, und konfiguriert ist, ein Lichtsignal zu emittieren, das anzeigt, wann sich der Kupplungsstift in einer Kupplungseingriffsposition befindet,
wobei die Lichtemissionsvorrichtung (10) in der Nähe des Sensors angeordnet ist,
**gekennzeichnet durch**
einen optischen Wellenleiter (11), der angeordnet ist, das Lichtsignal zu empfangen und das Lichtsignal zu führen, und
eine Auskoppelstruktur (17; 18) zum Auskoppeln des Lichtsignals aus dem optischen Wellenleiter.

2. Anordnung nach Anspruch 1, wobei der optische Wellenleiter (11) eine flexible Lichtleitfaser (12) ist.

3. Anordnung nach Anspruch 2, wobei sich die Auskoppelstruktur (18) entlang der Oberfläche der optischen Faser erstreckt, um ein Auskoppeln von Licht in einer radialen Richtung entlang der optischen Faser bereitzustellen.

4. Anordnung nach Anspruch 3, wobei die optische Faser (12) in einem Pfad in einer horizontalen Ebene angeordnet ist, um Licht in alle Richtungen in der horizontalen Ebene zu emittieren.

5. Anordnung nach Anspruch 1 oder 2, wobei der optische Wellenleiter (10) ein erstes Ende (12a) benachbart zu der Lichtemissionsvorrichtung aufweist, wobei das erste Ende angeordnet ist, das Lichtsignal zu empfangen, und ein zweites Ende (12b) an einer Stelle (13) in einem Abstand von dem Sensor, wobei eine Endfläche (17) des Wellenleiters (10) die Auskoppelstruktur bildet.

6. Anordnung nach Anspruch 5, wobei sich die Stelle (13) an einer Außenseite (14) des Zugfahrzeugs (1) befindet.

7. Anordnung nach Anspruch 6, wobei sich die Stelle auf der Fahrerseite (14) des Zugfahrzeugs befindet.

8. Anordnung nach einem der Ansprüche 5 bis 7, wobei die Auskoppelstruktur eine Linse (15) umfasst, die konfiguriert ist, das Lichtsignal in einer gewünschten Richtung zu emittieren.

9. Anordnung nach einem der Ansprüche 5 bis 7, wobei das von dem zweiten Ende (12b) emittierte Licht auf eine Vorderseite des Zugfahrzeugs gerichtet ist.

10. Anordnung nach einem der vorhergehenden Ansprüche, wobei die Lichtemissionsvorrichtung (10) mindestens eine Leuchtdiode (LED) aufweist.

11. Anordnung nach einem der vorhergehenden Ansprüche, wobei die Kupplungsvorrichtung ferner einen Verriegelungsstift (20) umfasst, der konfiguriert ist, den Kupplungsstift (4) in seiner Kupplungseingriffsposition mechanisch zu verriegeln, und wobei die Sensoranordnung (22) konfiguriert ist, zu detektieren, durch Detektieren der Position des Verriegelungsstiftes (20), wann sich der Kupplungsstift (4) in der Kupplungseingriffsposition befindet.

12. Anordnung nach Anspruch 11, wobei, wenn sich der Kupplungsstift (4) in seiner Kupplungseingriffsposition befindet, der Verriegelungsstift (20) in einer im Wesentlichen horizontalen Richtung zu einer eingesteckten Position bewegbar ist, in der der Verriegelungsstift (20) ein Lösen des Kupplungsstiftes (4) verhindert.

## Revendications

1. Agencement pour fournir une indication d'état d'un dispositif de couplage d'un véhicule de remorquage, comprenant :
un agencement de capteur (20) utilisable pour détecter quand une broche de couplage dudit dispositif de couplage est une position de couplage engagé,
un dispositif d'émission de lumière (10) connecté électriquement audit agencement de capteur, et configuré pour émettre un signal lumineux qui indique quand ladite broche de couplage est en position de couplage engagé,
ledit dispositif d'émission de lumière (10) étant agencé à proximité dudit capteur,
**caractérisé par**
un guide d'ondes optique (11) agencé pour recevoir ledit signal lumineux et guider ledit signal lumineux, et
une structure de couplage de sortie (17 ; 18) agencée pour effectuer un couplage de sortie dudit signal lumineux provenant dudit guide d'ondes optique.

2. Agencement selon la revendication 1, dans lequel le guide d'ondes optique (11) est une fibre optique flexible (12).

3. Agencement selon la revendication 2, dans lequel ladite structure de couplage de sortie (18) s'étend le long de la surface de la fibre optique pour fournir un couplage de sortie de la lumière en direction radiale le long de la fibre optique.

4. Agencement selon la revendication 3, dans lequel ladite fibre optique (12) est agencée dans un chemin compris dans un plan horizontal, de manière à émettre de la lumière dans toutes les directions dans le plan horizontal.

5. Agencement selon la revendication 1 ou 2, dans lequel le guide d'ondes optique (10) comporte une première extrémité (12a) adjacente audit dispositif d'émission de lumière, ladite première extrémité étant agencée pour recevoir ledit signal lumineux, et une deuxième extrémité (12b) à un emplacement (13) à distance dudit capteur, une surface d'extrémité (17) du guide d'ondes (10) formant la structure de couplage de sortie.

6. Agencement selon la revendication 5, dans lequel ledit emplacement (13) se trouve sur un côté externe (14) du véhicule de remorquage (1).

7. Agencement selon la revendication 6, dans lequel ledit emplacement se trouve du côté conducteur (14) du véhicule de remorquage.

8. Agencement selon l'une des revendications 5 à 7, dans lequel ladite structure de couplage de sortie comprend une lentille (15) configurée pour émettre ledit signal lumineux dans une direction désirée.

9. Agencement selon l'une des revendications 5 à 7, dans lequel la lumière émise par la deuxième extrémité (12b) est dirigée vers l'avant du véhicule de remorquage.

10. Agencement selon l'une des revendications précédentes, dans lequel le dispositif d'émission de lumière (10) comprend au moins une diode électroluminescente (LED).

11. Agencement selon l'une des revendications précédentes, dans lequel le dispositif de couplage comprend en outre une broche de verrouillage (20) configurée pour verrouiller mécaniquement la broche de couplage (4) dans sa position de couplage engagé, et dans lequel ledit agencement de capteur (22) est configuré pour détecter quand la broche de couplage (4) se trouve dans la position de couplage engagé en détectant la position de ladite broche de verrouillage (20).

12. Agencement selon la revendication 11, dans lequel, quand ladite broche de couplage (4) se trouve dans sa position de couplage engagé, la broche de verrouillage (20) est mobile en direction substantiellement horizontale à une position insérée dans laquelle la broche de verrouillage (20) évite un désengagement de la broche de couplage (4).
